# EUROPEAN PATENT SPECIFICATION

(11) **EP 4 135 240 B1**
(45) Date of publication and mention of the grant of the patent: **28.01.2026**
(21) Application number: 21808848.2
(22) Date of filing: 17.05.2021
(51) Int. Cl.: H04L 1/18, H04L 1/08, H04L 1/00, H04W 28/02, H04W 28/04

(54) **APPARATUS AND METHOD FOR PROCESSING SIDELINK HARQ RETRANSMISSION PROCEDURE IN WIRELESS COMMUNICATION SYSTEM**
VORRICHTUNG UND VERFAHREN ZUR VERARBEITUNG EINES SIDELINK-HARQ-NEUÜBERTRAGUNGSVERFAHRENS IN EINEM DRAHTLOSKOMMUNIKATIONSSYSTEM
APPAREIL ET PROCÉDÉ DE TRAITEMENT D'UNE PROCÉDURE DE RETRANSMISSION DE HARQ EN LIAISON LATÉRALE DANS UN SYSTÈME DE COMMUNICATION SANS FIL

(30) Priority: 18.05.2020 KR 20200059370
(43) Date of publication of application: 15.02.2023
(73) Proprietor: Samsung Electronics Co., Ltd., Gyeonggi-do 16677 (KR)
(72) Inventor: KANG, Hyunjeong, Suwon-si Gyeonggi-do 16677 (KR); AGIWAL, Anil, Suwon-si Gyeonggi-do 16677 (KR)
(74) Representative: Nederlandsch Octrooibureau
(86) International application number: PCT/KR2021/006129
(87) International publication number: WO 2021/235792

(56) References cited:
- WO-A2-2011/031109
- KR-A- 20110 025 049
- KR-A- 20110 081 027
- US-A1- 2005 008 035
- LENOVO ET AL: "Remaining aspects of NR V2X Tx UE behavior", vol. RAN WG2, no. Electronic; 20200420 - 20200430, 9 April 2020 (2020-04-09), XP052354092, Retrieved from the Internet <URL:https://ftp.3gpp.org/tsg_ran/WG2_RL2/TSGR2_109bis-e/Docs/R2-2003116.zip R2-2003116 Remaining aspects of NR V2X Tx UE behavior.docx> [retrieved on 20200409]
- LENOVO ET AL: "Transmitter UE behavior in Mode 1 and Mode 2", vol. RAN WG2, no. Reno, USA; 20191118 - 20191122, 7 November 2019 (2019-11-07), XP051815820, Retrieved from the Internet <URL:https://ftp.3gpp.org/tsg_ran/WG2_RL2/TSGR2_108/Docs/R2-1915151.zip R2-1915151 Transmitter UE behavior in Mode 1 and Mode.docx> [retrieved on 20191107]
- VIVO: "Remaining issues on HARQ support for NR Sidelink", 3GPP DRAFT; R2-2000287, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. E-Meeting; 20200224 - 20200306, 14 February 2020 (2020-02-14), Mobile Competence Centre ; 650, route des Lucioles ; F-06921 Sophia-Antipolis Cedex ; France , XP051848925

## Description

### [Technical Field]

The disclosure relates to a wireless communication system and, more particularly, to a method and apparatus for a terminal to apply hybrid automatic repeat request (HARQ) feedback-based retransmission and blind retransmission in a mixed manner for the same sidelink logical channel in a wireless communication system.

### [Background Art]

To meet the ever increasing demand for wireless data traffic since the commercialization of 4^{th} generation (4G) communication systems, efforts have been made to develop improved 5^{th} generation (5G) or pre-5G communication systems. As such, 5G or pre-5G communication systems are also called "beyond 4G network system" or "post Long Term Evolution (LTE) system".

To achieve high data rates, 5G communication systems are being considered for implementation in the extremely high frequency (mmWave) band (e.g., 60 GHz band). To decrease path loss of radio waves and increase the transmission distance in the mmWave band, various technologies including beamforming, massive multiple-input multiple-output (massive MIMO), full dimensional MIMO (FD-MIMO), array antennas, analog beamforming, and large scale antennas are considered for 5G communication systems.

To improve system networks in 5G communication systems, technology development is under way regarding evolved small cells, advanced small cells, cloud radio access networks (cloud RANs), ultra-dense networks, device-to-device (D2D) communication, wireless backhaul, moving networks, cooperative communication, coordinated multi-points (CoMP), interference cancellation, and the like.

Additionally, advanced coding and modulation (ACM) schemes such as hybrid frequency shift keying and quadrature amplitude modulation (FQAM) and sliding window superposition coding (SWSC), and advanced access technologies such as filter bank multi carrier (FBMC), non-orthogonal multiple access (NOMA), and sparse code multiple access (SCMA) are also under development for 5G systems.

Meanwhile, the Internet is evolving from a human centered network where humans create and consume information into the Internet of Things (IoT) where distributed elements such as things exchange and process information. There has also emerged the Internet of Everything (IoE) technology that combines IoT technology with big data processing technology through connection with cloud servers. To realize IoT, technology elements related to sensing, wired/wireless communication and network infrastructure, service interfacing, and security are needed, and technologies interconnecting things such as sensor networks, machine-to-machine (M2M) or machine type communication (MTC) are under research in recent years. In IoT environments, it is possible to provide intelligent Internet technology services, which collect and analyze data created by interconnected things to add new values to human life. Through convergence and combination between existing information technologies and various industries, IoT technology may be applied to various areas such as smart homes, smart buildings, smart cities, smart or connected cars, smart grids, health-care, smart consumer electronics, and advanced medical services.

Accordingly, various attempts are being made to apply 5G communication systems to IoT networks. For example, technologies such as sensor networks and machine-to-machine (M2M) or machine type communication (MTC) are being realized by use of 5G communication technologies including beamforming, MIMO, and array antennas. Application of cloud RANs as a big data processing technique described above may be an instance of convergence of 5G technology and IoT technology.

In addition, terminal-to-terminal communication (sidelink communication) using 5G communication system is being studied, and the sidelink communication is applied to, for example, vehicle-to-everything (V2X) and is expected to provide various services to users.

Existing methods are disclosed in LENOVO ET AL: "Remaining aspects of NR V2X Tx UE behavior",3GPP DRAFT; R2-2003116, 9 April 2020, and LENOVO ET AL: "Transmitter UE behavior in Mode 1 and Mode 2",3GPP DRAFT; R2-1915151, 7 November 2019.

### [Disclosure of Invention]

### [Technical Problem]

The disclosure is to provide an apparatus and method for a terminal to process HARQ feedback-based retransmission and blind retransmission (performing retransmission based on retransmission configuration values without HARQ feedback from receiving terminal) in a mixed manner for the same sidelink logical channel in a wireless communication system.

### [Solution to Problem]

The invention is defined by the appended claims.

### [Advantageous Effects of Invention]

According to various embodiments of the disclosure, the terminal can apply various HARQ retransmission modes such as HARQ feedback-based retransmission and blind retransmission for the same sidelink logical channel, which can produce the effect of efficiently supporting the sidelink flow configured for services with various quality of service (QoS) profiles and mixed QoS profiles.

The effects that can be obtained in the disclosure are not limited to those mentioned above, and other effects not mentioned will be clearly understood by those of ordinary skill in the art to which the disclosure belongs from the following description.

### [Brief Description of Drawings]

FIG. 1 is a diagram illustrating a wireless communication system according to an embodiment of the disclosure.
FIG. 2 is a diagram illustrating the configuration of a base station in a wireless communication system according to an embodiment of the disclosure.
FIG. 3 is a diagram illustrating the configuration of a UE in a wireless communication system according to an embodiment of the disclosure.
FIG. 4 is a diagram illustrating the configuration of a communication unit in a wireless communication system according to an embodiment of the disclosure.
FIG. 5 is a diagram illustrating the structure of radio time-frequency resources in a wireless communication system according to an embodiment of the disclosure.
FIG. 6A is a diagram illustrating a scenario for sidelink communication according to an embodiment of the disclosure.
FIG. 6B is a diagram illustrating a scenario for sidelink communication according to an embodiment of the disclosure.
FIG. 6C is a diagram illustrating a scenario for sidelink communication according to an embodiment of the disclosure.
FIG. 6D is a diagram illustrating a scenario for sidelink communication according to an embodiment of the disclosure.
FIG. 7A is a diagram for explaining a transmission scheme for sidelink communication according to an embodiment of the disclosure.
FIG. 7B is a diagram for explaining a transmission scheme for sidelink communication according to an embodiment of the disclosure.
FIG. 8 is a diagram illustrating operations of the UE to handle sidelink HARQ retransmission according to an embodiment of the disclosure.
FIG. 9 is a diagram illustrating operations of the UE to handle sidelink HARQ retransmission according to an embodiment of the disclosure.

### [Mode for the Invention]

Hereinafter, exemplary embodiments of the disclosure will be described in detail with reference to the accompanying drawings. Here, it should be noted that the same components are denoted by the same reference symbols as much as possible in the accompanying drawings. In addition, detailed descriptions of well-known functions and configurations that may obscure the gist of the disclosure will be omitted.

In the following description of embodiments of the present specification, descriptions of technical details well known in the art and not directly related to the disclosure may be omitted. This is to more clearly convey the subject matter of the disclosure without obscurities by omitting unnecessary descriptions.

Likewise, in the drawings, some elements are exaggerated, omitted, or only outlined in brief. Also, the size of each element does not necessarily reflect the actual size. The same or similar reference symbols are used throughout the drawings to refer to the same or like parts.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the description to refer to the same parts.

Meanwhile, it will be appreciated that blocks of a flowchart and a combination of flowcharts may be executed by computer program instructions. These computer program instructions may be loaded on a processor of a general purpose computer, special purpose computer, or programmable data processing equipment, and the instructions executed by the processor of a computer or programmable data processing equipment create a means for carrying out functions described in blocks of the flowchart. To implement the functionality in a certain way, the computer program instructions may also be stored in a computer usable or readable memory that is applicable in a specialized computer or a programmable data processing equipment, and it is possible for the computer program instructions stored in a computer usable or readable memory to produce articles of manufacture that contain a means for carrying out functions described in blocks of the flowchart. As the computer program instructions may be loaded on a computer or a programmable data processing equipment, when the computer program instructions are executed as processes having a series of operations on a computer or a programmable data processing equipment, they may provide steps for executing functions described in blocks of the flowchart.

Further, each block of a flowchart may correspond to a module, a segment or a code containing one or more executable instructions for executing one or more logical functions, or to a part thereof. It should also be noted that functions described by blocks may be executed in an order different from the listed order in some alternative cases. For example, two blocks listed in sequence may be executed substantially at the same time or executed in reverse order according to the corresponding functionality.

Here, the word "unit", "module", or the like used in the embodiments may refer to a software component or a hardware component such as an FPGA or ASIC capable of carrying out a function or an operation. However, "unit" or the like is not limited to hardware or software. A unit or the like may be configured so as to reside in an addressable storage medium or to drive one or more processors. For example, units or the like may refer to components such as a software component, object-oriented software component, class component or task component, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose larger components and units. Further, components and units may be implemented to drive one or more processors in a device or a secure multimedia card.

In describing the embodiments of the disclosure in detail, the main focus is placed on the radio access network (new RAN (NR)) and the packet core (5G system, 5G core network, or next generation core (NG core)) being the core network according to the 5G mobile communication standards specified by 3GPP being a mobile communication standardization organization, but it should be understood by those skilled in the art that the subject matter of the disclosure is applicable to other communication systems having similar technical backgrounds without significant modifications departing from the scope of the disclosure.

In the 5G system, to support network automation, a network data collection and analysis function (NWDAF), which is a network function that provides a function to analyze and provide data collected from a 5G network, can be defined. The NWDAF can collect/store/analyze information from the 5G network and provide results to unspecified network functions (NFs), and the analysis results can be used independently by each NF.

For convenience of description, some terms and names defined in the 3rd Generation Partnership Project Long Term Evolution (3GPP) standards (standards of 5G, NR, LTE, or similar systems) may be used. However, the disclosure is not limited by these terms and names, and may be equally applied to systems conforming to other standards.

Hereinafter, the disclosure relates to an apparatus and method for a UE to process a sidelink operation in a wireless communication system when HARQ feedback-based retransmission is applied, when blind retransmission is applied, and when both HARQ feedback-based retransmission and blind retransmission are applied. Specifically, in the disclosure, the UE may identify the HARQ retransmission mode configuration for a sidelink logical channel, and process HARQ feedback-based retransmission, blind retransmission, or HARQ feedback-based retransmission and blind retransmission according to HARQ retransmission mode of the sidelink logical channel included in a medium access control (MAC) protocol data unit (PDU), configuration information determining the HARQ retransmission mode (packet delay budget (PDB) or latency), or the feedback mode or feedback transmission resource configuration indicated by the base station.

According to an embodiment of the disclosure, the UE can produce the effect of effectively supporting the sidelink flow set for serving various QoS profiles and mixed QoS profiles by operating various HARQ retransmission modes.

Those terms used in the following description for indicating a signal, indicating a channel, indicating control information, indicating a network entity, and indicating a component of an equipment are taken as illustration for ease of description. Accordingly, the disclosure is not limited by the terms used herein, and other terms referring to objects having an equivalent technical meaning may be used.

In the following description, a physical channel and a signal may be used interchangeably with data or a control signal. For example, a physical downlink shared channel (PDSCH) is a term referring to a physical channel through which data is transmitted, but the PDSCH may also be used to refer to data. That is, in the disclosure, an expression "transmitting a physical channel" may be interpreted equivalently to an expression "transmitting data or a signal through a physical channel".

In the disclosure, higher signaling indicates a method of transmitting a signal from the base station to the UE by using a downlink data channel of the physical layer, or from the UE to the base station by using an uplink data channel of the physical layer. Higher signaling may be understood as radio resource control (RRC) signaling or medium access control (MAC) control element (CE).

Also, in the disclosure, to determine whether a specific condition is satisfied or fulfilled, an expression such as 'greater than' or 'less than' may be used, but this is illustrative and does not exclude the use of 'greater than or equal to' or 'less than or equal to'. 'Greater than or equal to', 'less than or equal to', and **'greater than or equal to and less than'** may be replaced with 'greater than', 'less than', and **'greater than and greater than or equal to',** respectively.

Further, in the disclosure, performing HARQ retransmission may mean retransmission of data (MAC PDU or transport block including the same) when receiving a negative acknowledgement (NACK) from the receiving UE in the case of HARQ feedback-based retransmission, and may mean retransmission of data (MAC PDU or transport block including the same) according to a configured retransmission value without relying on HARQ feedback from the receiving UE in the case of blind retransmission.

Further, in the disclosure, processing retransmission may mean performing retransmission of data (MAC PDU or transport block including the same).

In addition, although the disclosure describes embodiments using terms used in some communication standards (e.g., 3rd generation partnership project (3GPP)), this is only an example for description. The embodiments of the disclosure may be applied to other communication systems with easy modifications.

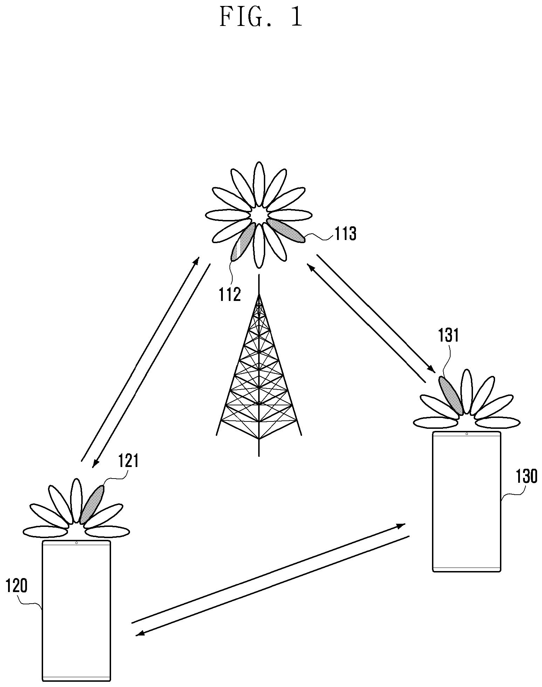

FIG. 1 is a diagram illustrating a wireless communication system according to an embodiment of the disclosure.

FIG. 1 illustrates a base station 110, a UE 120, and a UE 130 as a node using a radio channel in a wireless communication system. Although only one base station is illustrated in FIG. 1, other base stations that are the same as or similar to the base station 110 may be further included.

The base station 110 is a network infrastructure that provides radio access to the UEs 120 and 130. The base station 110 has a coverage defined as a specific geographic area based on the signal transmission distance. The base station 110 may also be referred to as "access point (AP)", "eNodeB (eNB)", "5^{th} generation node (5G node)", "next generation nodeB (gNB)", "wireless point", "transmission/reception point (TRP)", or another term having an equivalent technical meaning.

Each of the first UE 120 and the second UE 130 is a device used by a user, and performs communication with the base station 110 through a radio channel. The link from the base station 110 to the first UE 120 or the second UE 130 is referred to as downlink (DL), and the link from the first UE 120 or the second UE 130 to the base station 110 is referred to as uplink (UL). Further, the first UE 120 and the second UE 130 may perform communication with each other through a radio channel. Here, the link between the first UE 120 and the second UE 130 is referred to as sidelink, and the sidelink may also be referred to as a PC5 interface. In some cases, at least one of the first UE 120 or the second UE 130 may be operated without user's involvement. That is, at least one of the first UE 120 or the second UE 130 is a device that performs machine type communication (MTC), and may be not carried by the user. Each of the first UE 120 and the second UE 130 may be referred to as "user equipment (UE)", "UE", "subscriber station", "remote UE", "wireless UE", "user device", or another term having an equivalent technical meaning.

The base station 110, the first UE 120, and the second UE 130 may transmit and receive radio signals in the millimeter wave (mmWave) band (e.g., 28 GHz, 30 GHz, 38 GHz, and 60 GHz). In this case, to improve the channel gain, the base station 110, the first UE 120, and the second UE 130 may perform beamforming. Here, beamforming may include transmit beamforming and receive beamforming. That is, the base station 110, the first UE 120, and the second UE 130 may give directivity to a transmission signal or a reception signal. To this end, the base station 110 and the UEs 120 and 130 may select serving beams 112, 113, 121 and 131 through a beam search or beam management procedure. After the serving beams 112, 113, 121 and 131 are selected, subsequent communication may be performed through resources having a quasi co-located (QCL) relationship with the resources having transmitted the serving beams 112, 113, 121 and 131.

If large-scale characteristics of the channel carrying a symbol on a first antenna port can be inferred from the channel carrying a symbol on a second antenna port, the first antenna port and the second antenna port may be evaluated to be in a QCL relationship. For example, the large-scale characteristics may include at least one of delay spread, Doppler spread, Doppler shift, average gain, average delay, or spatial receiver parameter.

The first UE 120 and the second UE 130 illustrated in FIG. 1 may support vehicular communication. In the case of vehicular communication, standardization for vehicle-to-everything (V2X) technology based on the device-to-device (D2D) communication structure has been completed in 3GPP Release 14 and Release 15 for the LTE system, and currently, efforts are underway to develop V2X technology based on 5G NR. NR V2X will support unicast communication between UEs, groupcast (or multicast) communication, and broadcast communication. Further, unlike LTE V2X which aims to transmit and receive basic safety information necessary for the vehicle to drive on the road, NR V2X aims to provide more advanced services such as platooning, advanced driving, extended sensor, and remote driving.

V2X services can be divided into basic safety services and advanced services. The basic safety services may include vehicle notification (cooperative awareness message (CAM) or basic safety message (BSM)) services, and detailed services such as left turn notification, forward collision warning, emergency vehicle approaching, forward obstacle warning, and intersection movement information; and V2X information may be transmitted and received by using broadcast, unicast, or groupcast transmission. The advanced services not only have enhanced quality of service (QoS) requirements compared to the basic safety services but also require a method for transmitting and receiving V2X information by using unicast and groupcast in addition to broadcast so that V2X information can be transmitted and received within a specific vehicle group or between two vehicles. The advanced services may include detailed services such as platooning, autonomous driving, remote driving, and extended sensor-based V2X service.

In the following description, the sidelink (SL) refers to a signal transmission/reception path between UEs, and may be used interchangeably with PC5 interface. Also, the base station is a main agent that allocates resources to the UE, and it may be a base station that supports both V2X communication and regular cellular communication or a base station that supports only V2X communication. That is, the base station may mean an NR base station (e.g., gNB), an LTE base station (e.g., eNB), or a road site unit (RSU). The UE may include not only a general user equipment and a mobile station but also include a vehicle supporting vehicle-to-vehicle (V2V) communication, a vehicle or pedestrian handset (i.e., smartphone) supporting vehicle-to-pedestrian (V2P) communication, a vehicle supporting vehicle-to-network (V2N) communication, a vehicle supporting vehicle-to-infrastructure (V2I) communication, an RSU equipped with UE functionality, an RSU equipped with base station functionality, and an RSU equipped with some of base station functionality and some of UE functionality. Further, the following description, the V2X UE may be referred to as a UE. That is, in relation to V2X communication, the UE may be used as a V2X UE.

The base station and the UE may be connected through a Uu interface. Uplink (UL) means a radio link through which the UE transmits data or a control signal to the base station, and downlink (DL) refers to a radio link through which the base station transmits data or a control signal to the UE.

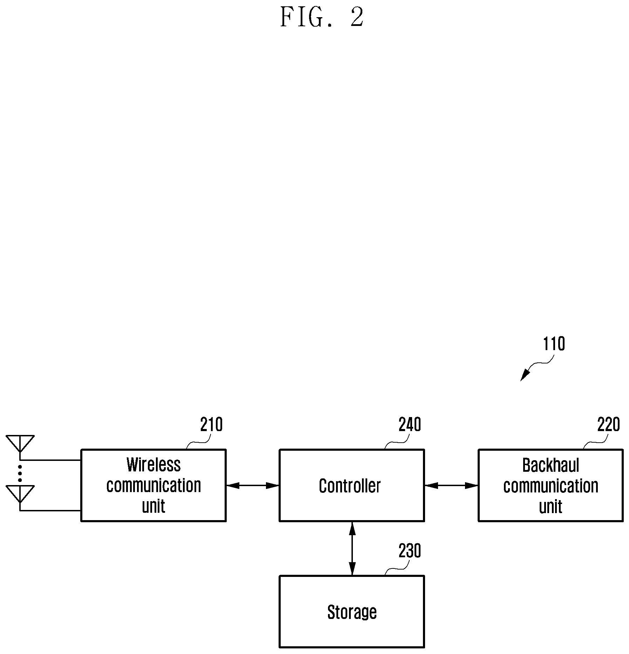

FIG. 2 is a diagram illustrating the configuration of a base station in a wireless communication system according to an embodiment of the disclosure.

The configuration shown in FIG. 2 may be understood as a configuration of the base station 110. A term such as "... unit" or "... device" used herein means a unit that processes at least one function or operation, and may be implemented with hardware, software, or a combination thereof.

With reference to FIG. 2, the base station 110 may include a wireless communication unit 210, a backhaul communication unit 220, a storage 230, and a controller 240.

The wireless communication unit 210 performs functions for transmitting and receiving signals through a radio channel. For example, the wireless communication unit 210 performs conversion between a baseband signal and a bit stream in accordance with the physical layer specification of the system. For instance, for data transmission, the wireless communication unit 210 generates complex symbols by encoding and modulating a transmission bit stream. Further, for data reception, the wireless communication unit 210 restores a reception bit stream by demodulating and decoding a baseband signal.

In addition, the wireless communication unit 210 performs up-conversion of a baseband signal into a radio frequency (RF) band signal and transmits the converted signal through an antenna, and performs down-conversion of an RF-band signal received through an antenna into a baseband signal. To this end, the wireless communication unit 210 may include a transmission filter, a reception filter, an amplifier, a mixer, an oscillator, a digital-to-analog converter (DAC), and an analog-to-digital converter (ADC). Also, the wireless communication unit 210 may include a plurality of transmission and reception paths. Further, the wireless communication unit 210 may include at least one antenna array composed of plural antenna elements.

In terms of hardware, the wireless communication unit 210 may be composed of a digital unit and an analog unit, and the analog unit may include of a plurality of sub-units according to the operating power, operating frequency, and the like. The digital unit may be implemented with at least one processor (e.g., digital signal processor (DSP)).

The wireless communication unit 210 transmits and receives signals as described above. Hence, the whole or a part of the wireless communication unit 210 may be referred to as 'transmitter', 'receiver', or 'transceiver'. Also, in the following description, transmission and reception performed through a radio channel is used as having a meaning of processing performed by the wireless communication unit 210 as described above.

The backhaul communication unit 220 provides an interface for performing communication with other nodes on the network. That is, the backhaul communication unit 220 converts a bit stream to be transmitted from the base station 110 to another node, for example, another access node, another base station, higher node, or core network, into a physical signal, and converts a physical signal received from another node into a bit stream.

The storage 230 stores data such as basic programs, application programs, and configuration information for the operation of the base station 110. The storage 230 may be configured as a volatile memory, a non-volatile memory, or a combination thereof. In addition, the storage 230 provides stored data in response to a request from the controller 240.

The controller 240 controls the overall operation of the base station 110. For example, the controller 240 transmits and receives a signal through the wireless communication unit 210 or through the backhaul communication unit 220. Also, the controller 240 writes and reads data to and from the storage 230. In addition, the controller 240 may perform functions of a protocol stack required by the communication standard. According to another implementation example, the protocol stack may be included in the wireless communication unit 210. To this end, the controller 240 may include at least one processor. According to an embodiment, the controller 240 may control the base station 110 to perform operations according to embodiments to be described later.

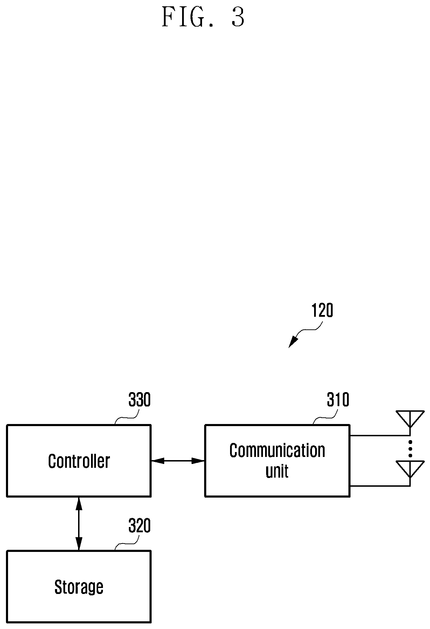

FIG. 3 is a diagram illustrating the configuration of a UE in a wireless communication system according to an embodiment of the disclosure.

The configuration shown in FIG. 3 may be understood as a configuration of the UE 120. A term such as "... unit" or "... device" used herein means a unit that processes at least one function or operation, and may be implemented with hardware, software, or a combination thereof.

With reference to FIG. 3, the UE 120 may include a communication unit 310, a storage 320, and a controller 330.

The communication unit 310 performs functions for transmitting and receiving signals through a radio channel. For example, the communication unit 310 performs conversion between a baseband signal and a bit stream in accordance with the physical layer specification of the system. For instance, for data transmission, the communication unit 310 generates complex symbols by encoding and modulating a transmission bit stream. Further, for data reception, the communication unit 310 restores a reception bit stream by demodulating and decoding a baseband signal. In addition, the communication unit 310 performs up-conversion of a baseband signal into an RF band signal and transmits the converted signal through an antenna, and performs down-conversion of an RF-band signal received through an antenna into a baseband signal. For example, the communication unit 310 may include a transmission filter, a reception filter, an amplifier, a mixer, an oscillator, a DAC, and an ADC.

In addition, the communication unit 310 may include a plurality of transmission and reception paths. Further, the communication unit 310 may include at least one antenna array composed of plural antenna elements. In terms of hardware, the communication unit 310 may be composed of a digital circuit and an analog circuit (e.g., radio frequency integrated circuit (RFIC)). Here, the digital circuit and the analog circuit may be implemented as a single package. Also, the communication unit 310 may include a plurality of RF chains. Further, the communication unit 310 may perform beamforming.

The communication unit 310 transmits and receives signals as described above. Hence, the whole or a part of the communication unit 310 may be referred to as 'transmitter', 'receiver', or 'transceiver'. Also, in the following description, transmission and reception performed through a radio channel is used as having a meaning of processing performed by the communication unit 310 as described above.

The storage 320 stores data such as basic programs, application programs, and configuration information for the operation of the UE 210. The storage 320 may be configured as a volatile memory, a non-volatile memory, or a combination thereof. In addition, the storage 320 provides stored data in response to a request from the controller 330.

The controller 330 controls the overall operation of the UE 120. For example, the controller 330 transmits and receives signals through the communication unit 310. Also, the controller 330 writes and reads data to and from the storage 320. In addition, the controller 330 may perform the functions of a protocol stack required by the communication standard. To this end, the controller 330 may include at least one processor or microprocessor, or may be a part of a processor. Further, a part of the communication unit 310 and the controller 330 may be referred to as a communication processor (CP). According to an embodiment, the controller 330 may control the UE 120 to perform operations according to embodiments to be described later.

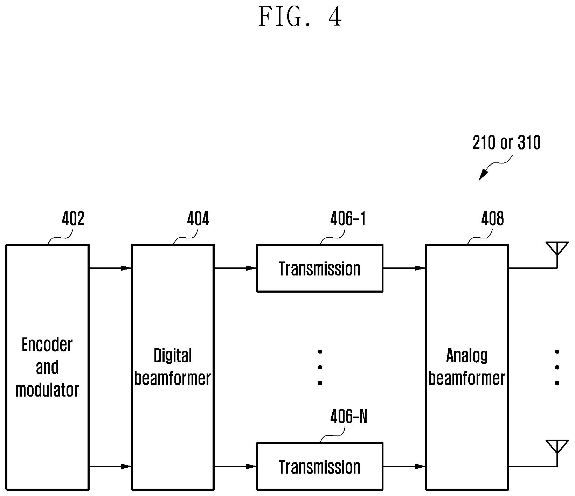

FIG. 4 is a diagram illustrating the constitution of a communication unit in a wireless communication system according to an embodiment of the disclosure.

FIG. 4 illustrates a detailed constitution of the wireless communication unit 210 in FIG. 2 or the communication unit 310 in FIG. 3. Specifically, FIG. 4 shows components for performing beamforming as a part of the wireless communication unit 210 in FIG. 2 or the communication unit 310 in FIG. 3.

With reference to FIG. 4, the wireless communication unit 210 or the communication unit 310 may include an encoder and modulator 402, a digital beamformer 404, a plurality of transmission paths 406-1 to 406-N, and an analog beamformer 408.

The encoder and modulator 402 performs channel encoding. For channel encoding, at least one of a low density parity check (LDPC) code, a convolution code, or a polar code may be used. The encoder and modulator 402 generates modulation symbols by performing constellation mapping.

The digital beamformer 404 performs beamforming on a digital signal (e.g., modulation symbols). To this end, the digital beamformer 404 multiplies the modulation symbols by beamforming weights. Here, the beamforming weights are used to change the magnitude and phase of a signal, and may be referred to as 'precoding matrix' or 'precoder'. The digital beamformer 404 outputs the digitally beamformed modulation symbols to the plural transmission paths 406-1 to 406-N. Here, according to the multiple input multiple output (MIMO) transmission scheme, the modulation symbols may be multiplexed, or the same modulation symbols may be provided to multiple transmit paths 406-1 to 406-N.

The plural transmission paths 406-1 to 406-N convert digitally beamformed digital signals into an analog signal. To this end, each of the plural transmission paths 406-1 to 406-N may include an inverse fast Fourier transform (IFFT) calculator, a cyclic prefix (CP) inserter, a DAC, and an up converter. The CP inserter is for orthogonal frequency division multiplexing (OFDM), and may be omitted when another physical layer scheme (e.g., filter bank multi-carrier (FBMC)) is applied. That is, the plural transmission paths 406-1 to 406-N provide independent signal processing processes for a plurality of streams generated through digital beamforming. However, depending on the implementation scheme, some of the components of the plural transmission paths 406-1 to 406-N may be used in common.

The analog beamformer 408 performs beamforming on an analog signal. To this end, the digital beamformer 404 multiplies analog signals by beamforming weights. Here, the beamforming weights are used to change the magnitude and phase of a signal. Specifically, the analog beamformer 408 may be configured in various ways according to the connection structure between the plural transmission paths 406-1 to 406-N and antennas. For example, each of the plural transmission paths 406-1 to 406-N may be connected to one antenna array. As another example, the plural transmission paths 406-1 to 406-N may be connected to one antenna array. As another example, the plural transmission paths 406-1 to 406-N may be adaptively connected to one antenna array or to two or more antenna arrays.

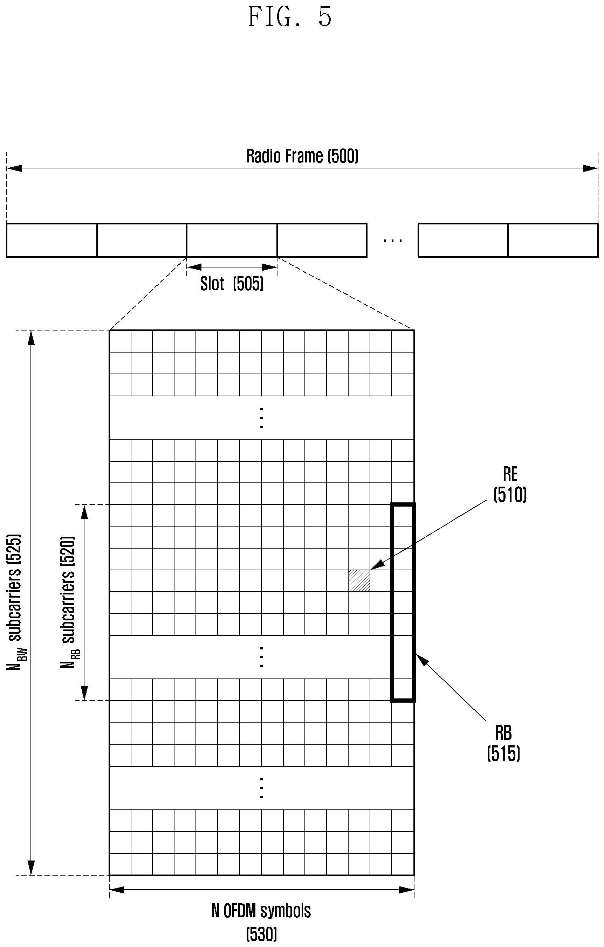

FIG. 5 is a diagram illustrating the structure of radio time-frequency resources in a wireless communication system according to an embodiment of the disclosure.

With reference to FIG. 5, in the radio resource region, the horizontal axis represents the time domain and the vertical axis represents the frequency domain. The minimum transmission unit in the time domain is OFDM or DFT-S-OFDM symbols, and N_{symb} OFDM or DFT-S-OFDM symbols 530 may be included in one slot 505. In the NR system, unlike the slot, the length of a subframe may be defined as 1.0 ms, and the length of a radio frame 500 may be defined as 10 ms. The minimum transmission unit in the frequency domain is subcarriers, and the entire system transmission bandwidth may include a total of New subcarriers 525. Specific values such as N_{symb} and N_{Bw} may be variably applied depending on the system.

The basic unit of the time-frequency resource region is a resource element (RE) 510, which may be represented by an OFDM or DFT-S-OFDM symbol index and a subcarrier index. A resource block (RB) 515 may be defined as N_{RB} consecutive subcarriers 520 in the frequency domain. In general, the minimum transmission unit of data is an RB, and N_{symb} = 14 and N_{RB} = 12 in the NR system.

The structure of radio time-frequency resources as shown in FIG. 5 may be applied to the Uu interface. In addition, the radio time-frequency resource structure as shown in FIG. 5 may be similarly applied to the sidelink.

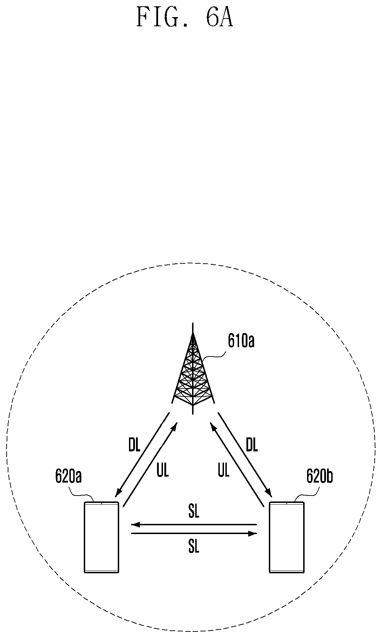

FIG. 6A is a diagram illustrating a scenario for sidelink communication according to an embodiment of the disclosure.

Referring to FIG. 6A, FIG. 6A illustrates an in-coverage scenario in which sidelink UEs 620a and 620b are located within the coverage of a base station 610. The sidelink UEs 620a and 620b may receive data and control information through a downlink (DL) from the base station 610, or may transmit data and control information to the base station through an uplink (UL). In this case, the data and control information may be data and control information for sidelink communication or data and control information for regular cellular communication other than sidelink communication. Also, in FIG. 6A, the sidelink UEs 620a and 620b may transmit and receive data and control information for sidelink communication through a sidelink (SL).

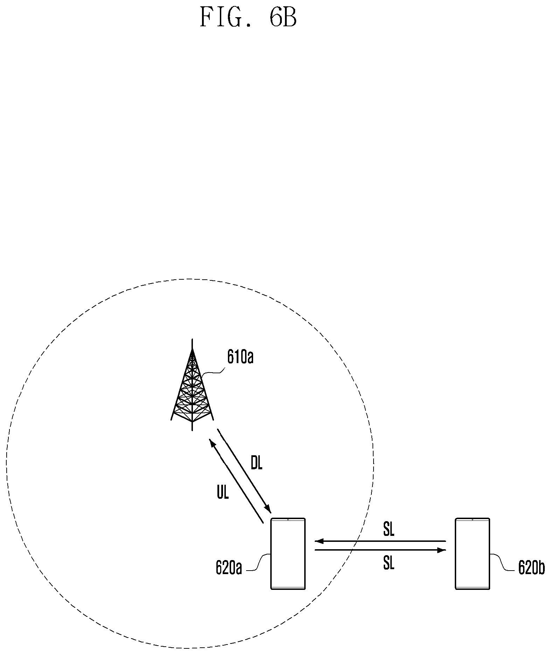

FIG. 6B is a diagram illustrating a scenario for sidelink communication according to an embodiment of the disclosure.

FIG. 6B illustrates a partial coverage case in which a first UE 620a among sidelink UEs is located within the coverage of the base station 610 and a second UE 620b is located outside the coverage of the base station 610. The first UE 620a located within the coverage of the base station 610 may receive data and control information from the base station through the downlink or transmit data and control information to the base station through the uplink. The second UE 620b located outside the coverage of the base station 610 cannot receive data and control information from the base station through the downlink, and cannot transmit data and control information to the base station through the uplink. The second UE 620b may transmit or receive data and control information for sidelink communication to or from the first UE 620a through the sidelink SL.

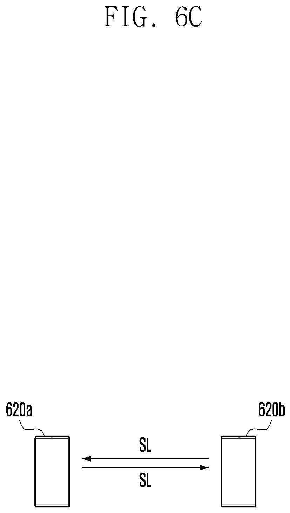

FIG. 6C is a diagram illustrating a scenario for sidelink communication according to an embodiment of the disclosure.

FIG. 6C illustrates a case in which sidelink UEs (e.g., first UE 620a and second UE 620b) are located outside the coverage of the base station. Hence, neither the first UE 620a nor the second UE 620b can receive data and control information from the base station through the downlink, and can transmit data and control information to the base station through the uplink. The first UE 620a and the second UE 620b may transmit or receive data and control information for sidelink communication through the sidelink SL.

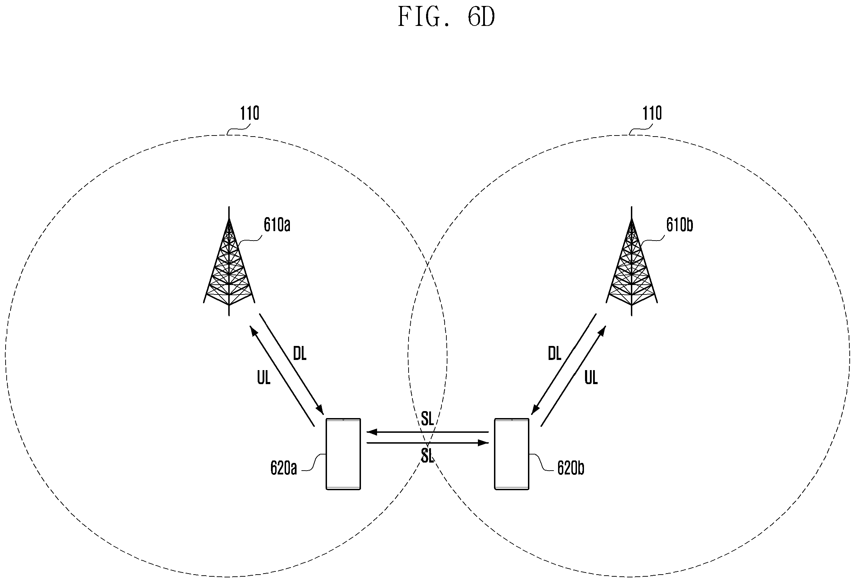

FIG. 6D is a diagram illustrating a scenario for sidelink communication according to an embodiment of the disclosure.

With reference to FIG. 6D, for sidelink communication, the first UE 620a and the second UE 620b, in connected state (e.g., RRC connected state) or camping state (e.g., RRC disconnected state, i.e., RRC idle state) with different base stations (e.g., first base station 610a and second base station 610b), may perform inter-cell sidelink communication. Here, the first UE 620a may be a sidelink transmitting UE, and the second UE 620b may be a sidelink receiving UE. Alternatively, the first UE 620a may be a sidelink receiving UE, and the second UE 620b may be a sidelink transmitting UE. The first UE 620a may receive a sidelink dedicated system information block (SIB) from the base station 610a to which it is connected (or on which it is camping), and the second UE 620b may receive a sidelink dedicated SIB from another base station 620b to which it is connected (or on which it is camping). In this case, the information of the sidelink dedicated SIB received by the first UE 620a and the information of the sidelink dedicated SIB received by the second UE 620b may be different from each other. Hence, it is necessary to unify information for sidelink communication between UEs located in different cells.

In the above-described examples of FIGS. 6A to 6D, a sidelink system composed of two UEs (e.g., first UE 610a and second UE 620b) has been described for convenience of explanation, but the disclosure is not limited thereto and may also be applied to a sidelink system composed of two or more UEs. In addition, the uplink and downlink between the base station 610, 610a or 610b and the sidelink UE 620a or 620b may be referred to as a Uu interface, and the sidelink between sidelink UEs may be referred to as a PC-5 interface. In the following description, uplink or downlink and Uu interface may be used interchangeably, and sidelink and PC-5 may be used interchangeably.

Meanwhile, in the disclosure, the UE may refer to a vehicle supporting vehicle-to-vehicle (V2V) communication, a vehicle or pedestrian handset (i.e., smartphone) supporting vehicle-to-pedestrian (V2P) communication, a vehicle supporting vehicle-to-network (V2N) communication, or a vehicle supporting vehicle-to-infrastructure (V2I) communication. Further, in the disclosure, the UE may refer to a road side unit (RSU) equipped with UE functionality, an RSU equipped with base station functionality, or an RSU equipped with some of base station functionality and some of UE functionality.

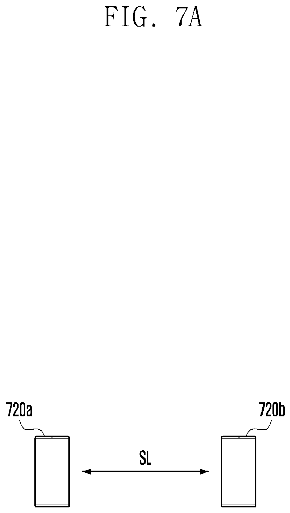

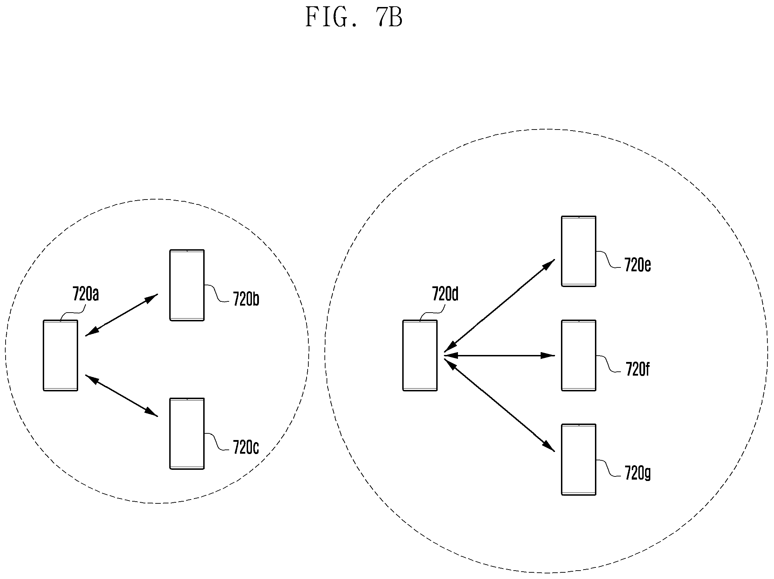

FIGS. 7A and 7B are a diagram for explaining a transmission scheme for sidelink communication according to an embodiment of the disclosure.

Specifically, FIG. 7A illustrates a unicast scheme, and FIG. 7B illustrates a groupcast scheme.

With reference to FIG. 7A, a transmitting UE 720a and a receiving UE 720b may perform one-to-one communication. The transmission scheme as shown in FIG. 7A may be referred to as unicast communication.

With reference to FIG. 7B, the transmitting UE 720a or 720d and the receiving UEs 720b and 720c, or 720e, 720f and 720g may perform one-to-many communication. The transmission scheme as shown in FIG. 7B may be referred to as groupcast or multicast. In FIG. 7B, a first UE 720a, a second UE 720b, and a third UE 720c form one group to perform groupcast communication; a fourth UE 720d, a fifth UE 720e, a sixth UE 720f, and a seventh UE 720g form another group to perform groupcast communication. One UE may perform groupcast communication in the group to which it belongs, and may perform unicast, groupcast, or broadcast communication with at least one other UE belonging to a different group. Although two groups are illustrated in FIG. 7B for convenience of explanation, the disclosure is not limited thereto, and may also be applied to a case where a larger number of groups is formed.

Meanwhile, although not shown in FIG. 7A or FIG. 7B, sidelink UEs may perform broadcast communication. Broadcast communication refers to a scheme in which all sidelink UEs receive data and control information transmitted by a sidelink transmitting UE through the sidelink. For example, in FIG. 7B, if the first UE 720a is a transmitting UE, the remaining UEs 720b, 720c, 720d, 720e, 720f and 720g may receive data and control information transmitted by the first UE 720a.

The aforementioned sidelink unicast communication, groupcast communication, and broadcast communication may be supported in an in-coverage scenario, a partial-coverage scenario, or an out-of-coverage scenario.

In the case of NR sidelink, unlike in LTE sidelink, support of a transmission type in which a vehicle UE transmits data to only one specific UE through unicast and a transmission type in which data is transmitted to a plurality of specific UEs through groupcast may be considered. For example, when considering a service scenario such as platooning, which is a technology that connects two or more vehicles on one network and moves in a cluster form, these unicast and groupcast techniques may be usefully utilized. Specifically, the leader UE of the group connected through platooning may use unicast communication to control one specific UE, and may use groupcast communication to simultaneously control the group composed of many specified UEs.

Resource allocation in the V2X system can be performed in the following way.

### (1) Mode 1 resource allocation

Scheduled resource allocation is a method in which the base station allocates resources used for sidelink transmission to RRC-connected UEs in a dedicated scheduling manner. The scheduled resource allocation can be effective for interference management and resource pool management (dynamic allocation and/or semi-persistent transmission) because the base station can manage sidelink resources. When there is data to be transmitted to other UE(s), the RRC connected mode UE may transmit information notifying that there is data to be transmitted to other UE(s) to the base station by using an RRC message or a MAC control element (CE). For example, the RRC message transmitted by the UE to the base station may be a sidelink UE information (e.g., SidelinkUEInformation) message or a UE assistant information (e.g., UEAssistanceInformation) message, and the MAC CE may correspond to a BSR MAC CE including at least one of an indication indicating that it is a buffer status report (BSR) for V2X communication or information on the size of data buffered for sidelink communication, or a scheduling request (SR).

### (2) Mode 2 resource allocation

Second, UE autonomous resource selection is a method in which sidelink transmission/reception resource pools for V2X are provided to the UE by use of system information or an RRC message (e.g., RRCReconfiguration message, PC5-RRC message) and the UE selects a resource pool and a resource according to a preset rule. The UE autonomous resource selection may correspond to one or more of the following resource allocation schemes.
> The UE autonomously selects a sidelink resource for transmission.
> The UE assists sidelink resource selection for other UEs.
> The UE is configured with NR configured grant for sidelink transmission.
> The UE may schedule sidelink transmission of other UEs.
   - The resource selection method of the UE may include zone mapping, sensing-based resource selection, random selection, and the like.
   - Additionally, even if the UE is located in the coverage of the base station, resource allocation or resource selection may be not performed in scheduled resource allocation or UE autonomous resource selection mode, in which case the UE may perform V2X sidelink communication through a preconfigured sidelink transmission/reception resource pool.
   - In addition, when UEs for V2X communication are located outside the coverage of the base station, the UE may perform V2X sidelink communication through a preconfigured sidelink transmission/reception resource pool.

When the UE performs sidelink-based data transmission/reception, HARQ retransmission may be processed. The sidelink HARQ retransmission may include HARQ feedback-based retransmission and blind retransmission. In the case of HARQ feedback-based retransmission, the transmitting UE may determine that retransmission is necessary by obtaining HARQ feedback from the receiving UE. According to an embodiment, HARQ feedback-based retransmission may be configured for each logical channel corresponding to a sidelink radio bearer (SLRB) of the UE. For a logical channel configured with HARQ feedback-based retransmission, the transmitting UE may instruct the receiving UE to transmit HARQ feedback, and may determine retransmission based on the HARQ feedback from the receiving UE. Here, the transmitting UE may instruct the receiving UE to transmit HARQ feedback by including information on whether to transmit HARQ feedback in control information (e.g., sidelink control information (SCI)) delivered to the receiving UE. On the other hand, for a logical channel not configured with HARQ feedback-based retransmission, the transmitting UE does not instruct the receiving UE to transmit HARQ feedback, and if a retransmission value is set, it may determine whether to perform retransmission based on this. Here, the latter case may be referred to as blind retransmission. The retransmission value may be set by the base station or set in advance. The retransmission value may be set to a value of 0 (no retransmission) or higher.

As described above, HARQ feedback-based retransmission or blind retransmission may be configured for one logical channel.

Meanwhile, to support more improved reliability and low-latency in the sidelink communication system, the disclosure proposes a method for applying (or using) both HARQ feedback-based retransmission and blind retransmission for one logical channel.

In various embodiments proposed in the disclosure, when configuring a sidelink radio bearer (SLRB), for one or more logical channels, HARQ feedback-based retransmission and blind retransmission may be configured to be used in a mixed manner. For example, HARQ feedback-based retransmission and blind retransmission may be used in a mixed manner in the following cases. On the other hand, the disclosure is not limited to the following examples; some of the following examples may be combined, or HARQ feedback-based retransmission and blind retransmission may be used in a mixed manner according to various schemes or conditions.
- Configure HARQ feedback-based retransmission to satisfy the reliability requirement of the QoS profile of a sidelink flow corresponding to a specific SLRB, but if it is determined that HARQ feedback-based retransmission is not suitable to satisfy the latency requirement of the QoS profile of the corresponding sidelink flow, blind retransmission may be applied.
- If it is determined that HARQ feedback resource allocation is not available while processing HARQ feedback-based retransmission for a logical channel configured with HARQ feedback-based retransmission, blind retransmission may be applied (e.g., a case where the configuration is changed to use a resource pool without a PSFCH resource, a case where it is determined that the base station does not allocate a PSFCH resource).
- When a logical channel configured with HARQ feedback-based retransmission and a logical channel configured with blind retransmission are allowed to be multiplexed
- When the base station instructs to perform blind retransmission for a logical channel configured with HARQ feedback-based retransmission for operational reasons

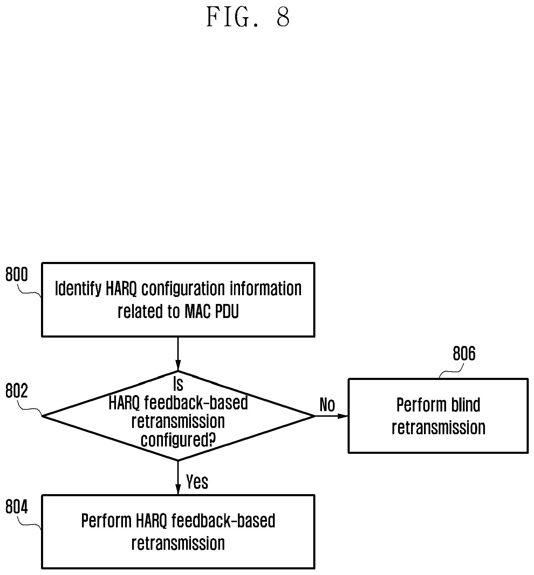

FIG. 8 is a diagram illustrating operations of the UE to handle sidelink HARQ retransmission according to an embodiment of the disclosure.

With reference to FIG. 8, at step 800, the UE may construct a sidelink medium access control (MAC) protocol data unit (PDU) to be transmitted, and identify HARQ configuration information applicable to a transport block including the MAC PDU. The HARQ configuration information may include at least one of HARQ feedback configuration information (e.g., HARQ feedback enabled or disabled setting) for a logical channel corresponding to the MAC PDU, or a maximum transmission value when blind retransmission is configured. When constructing a MAC PDU, a logical channel to be included in the MAC PDU may be determined according to the transmission priority of logical channels, and the HARQ feedback configuration to be applied to the MAC PDU may be determined based on the HARQ feedback configuration of the highest priority logical channel included in the MAC PDU.

At step 802, the UE may determine whether HARQ feedback-based retransmission is configured (e.g., HARQ feedback enabled setting) for the MAC PDU. Upon determining that HARQ feedback-based retransmission is configured based on the determination at step 802, at step 804, the UE may perform HARQ retransmission based on the feedback obtained from the receiving UE. Upon determining that HARQ feedback-based retransmission is not configured for the MAC PDU based on the determination at step 802, at step 806, the UE may perform HARQ retransmission based on the configuration for blind retransmission. For example, at step 806, the UE may identify the number of retransmissions based on the MaxTxTransNumPSSCH configuration value in Table 1.

**[Table 1]**

| |
|---|
| ```
 SL-PSSCH-TxParameters-r16 ::= SEQUENCE {
 sl-MinMCS-PSSCH-r16 INTEGER (0..27),
 sl-MaxMCS-PSSCH-r16 INTEGER (0..31),
 sl-MinSubChanneINumPSSCH-r16 INTEGER (1..27),
 sl-MaxSubchannelNumPSSCH-r16 INTEGER (1..27),
 sl-MaxTxTransNumPSSCH-r16 INTEGER (1..32),
 sl-MaxTxPower-r16 SL-TxPower-r16 OPTIONAL -- Cond CBR
``` |
| ```
 }
 sl-MaxTxTransN u m PSSCH
 Indicates the maximum transmission number (including new transmission and
 retransmission) for PSSCH (physical sidelink shared channel)
``` |

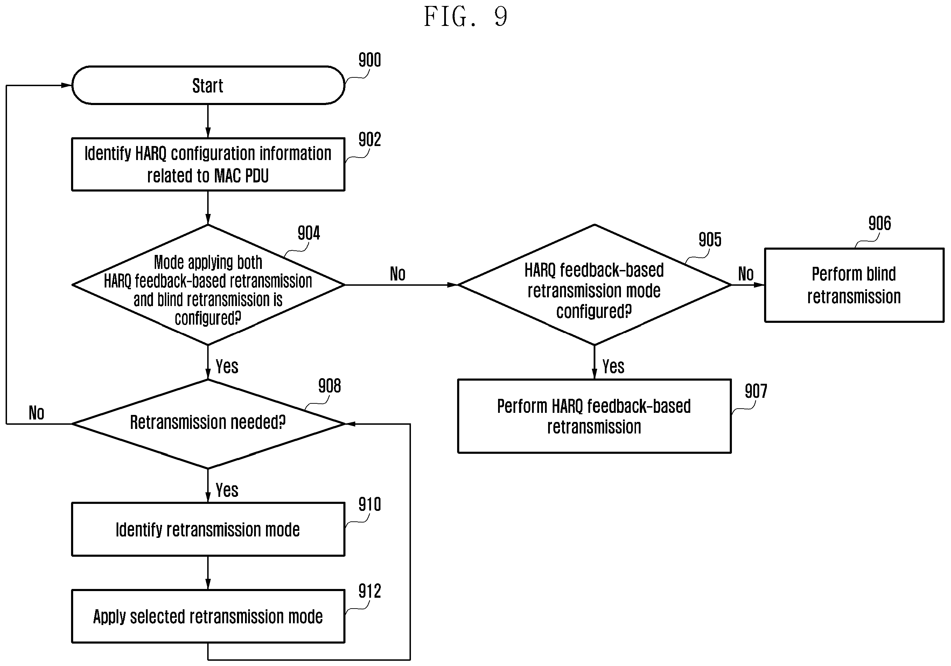

FIG. 9 is a diagram illustrating operations of the UE to handle sidelink HARQ retransmission according to an embodiment of the disclosure.

With reference to FIG. 9, at step 900, the UE may start the operation of sidelink HARQ processing. At step 902, the UE may construct a sidelink MAC PDU to be transmitted, and identify HARQ configuration information applicable to a transport block including the MAC PDU. The HARQ configuration information may include at least one of configuration information for a mode in which both HARQ feedback-based retransmission and blind retransmission are applied to a logical channel corresponding to the MAC PDU, configuration information for HARQ feedback-based retransmission mode, configuration information for blind retransmission mode, the maximum transmission value, or a combination thereof. Here, the configuration information about the mode in which both HARQ feedback-based retransmission and blind retransmission are applied may mean information indicating whether the mode applying both HARQ feedback-based retransmission and blind retransmission is enabled or disabled for a logical channel. Also, the configuration information about the HARQ feedback-based retransmission mode may mean information indicating whether the HARQ feedback-based retransmission mode is enabled or disabled for a logical channel. In addition, the configuration information about the blind retransmission mode may refer to information indicating whether the blind retransmission mode is enabled or disabled for a logical channel. On the other hand, information (e.g., indication) indicating one of HARQ feedback-based retransmission mode, blind retransmission mode, and mode in which both HARQ feedback-based retransmission and blind retransmission are applied may be included. At step 904, the UE may determine whether the mode applying both HARQ feedback-based retransmission and blind retransmission is configured for the MAC PDU to be transmitted. If it is determined at step 904 that the mode applying both HARQ feedback-based retransmission and blind retransmission is not configured, the UE may proceed to step 905. At step 905, the UE may perform the same procedure (step 906 or step 907) as the procedure of step 802 and subsequent steps in FIG. 8 (step 804 or step 806). Here, the UE may process MAC PDU transmission/retransmission according to the HARQ feedback configuration during HARQ feedback-based retransmission (step 907) or blind retransmission (step 906).

If it is determined at step 904 that the mode applying both HARQ feedback-based retransmission and blind retransmission is configured, at step 908, the UE may determine whether it is necessary to retransmit the transport block including the MAC PDU. The UE operation for determining retransmission at step 908 may include at least one the following operations or a combination thereof.
- When HARQ feedback-based retransmission is configured for the corresponding HARQ process at the transmission time of the most recent MAC PDU, and it is determined that the HARQ feedback obtained from the receiving UE is non-acknowledgement (e.g., when reception of HARQ ACK is expected but HARQ ACK is not received, when reception of HARQ ACK is expected but HARQ NACK is received, when HARQ NACK is received)
- When it is determined that blind retransmission is configured for the corresponding HARQ process and the maximum retransmission configuration value is not reached
- When it is determined that the maximum retransmission configuration value for the HARQ process is not reached
- When it is determined that retransmission is indicated for the corresponding HARQ process over the transmission resource allocated by the base station

If it is determined at step 908 that it is not necessary to retransmit the MAC PDU, the UE may proceed to step 900. If it is determined at step 908 that it is necessary to retransmit the MAC PDU, the UE may proceed to step 910. At step 910, the UE may identify the HARQ retransmission mode to be applied to the transport block including the MAC PDU. That is, the UE may select one of HARQ feedback-based retransmission and blind retransmission to be applied to the transport block including the MAC PDU. At step 912, the UE may transmit the transport block including the MAC PDU by applying the selected retransmission mode, and then proceed to step 908. For example, if the HARQ feedback-based retransmission mode is selected, the terminal may instruct the receiving UE to transmit HARQ feedback in response to the MAC PDU transmitted at step 912. As another example, if the blind retransmission mode is selected, the UE may transmit the MAC PDU without an HARQ feedback transmission instruction at step 912, and in this case, the UE may determine whether the preset maximum number of transmissions is not exceeded. On the other hand, when the mode applying both HARQ feedback-based retransmission and blind retransmission is configured, the maximum number of transmissions used by the UE for blind retransmission may be the same configuration value as the maximum number of transmissions (e.g., sl-MaxTxTransNumPSSCH) set in the case of applying only the blind retransmission mode, or may correspond to a configuration value for the maximum number of transmissions (eg, sl-MaxTxTransNumPSSCHMixed) set in the mixed mode.

Next, as an embodiment of the disclosure, a detailed description will be given of the operation in which the UE selects one of HARQ feedback-based retransmission and blind retransmission at step 910.

If the mode applying both HARQ feedback-based retransmission and blind retransmission is configured for a logical channel, upon determining that retransmission is necessary for the MAC PDU, the UE may determine whether to apply HARQ feedback-based retransmission or blind retransmission according to at least one of the following (1), (2), (3), (4), (5) and (6) or a combination thereof. As an embodiment, when at least one of (1), (2), (3), (4), (5) and (6) or a combination thereof is satisfied, the UE under HARQ feedback-based retransmission may transmit the MAC PDU by applying blind retransmission. Alternatively, as an embodiment, when at least one of (1), (2), (3), (4), (5) and (6) or a combination thereof is satisfied, the UE under blind retransmission may transmit the MAC PDU by applying HARQ feedback-based retransmission.
(1) If it is determined that a logical channel cannot satisfy the latency requirement of a corresponding SL flow (SLRB) (if transmission(s) with the configured sidelink grant cannot fulfil the latency requirement of the SL data in a logical channel)
(2) If it is determined that a logical channel cannot satisfy the PDB requirement of a corresponding SL flow (SLRB) (if transmission(s) with the configured sidelink grant cannot fulfil the PDB requirement of SL data available in a logical channel)
(3) If a resource is selected from the resource pool that does not include a physical sidelink feedback channel (PSFCH) resource (if the configured sidelink grant is (re-)selected from the pool of resource without PSFCH)
(4) If the base station indicates feedback enablement or disablement in an allocated resource in the case of mode 1 resource allocation where the base station allocates sidelink transmission resources (if the configured sidelink grant scheduled by gNB(ng-eNB) indicates HARQ feedback enabled or HARQ feedback disabled for a logical channel)
(5) In the case of mode 1 resource allocation where the base station allocates sidelink transmission resources, in the case of mode 2 resource allocation where the base station does not allocate feedback resources, if a sidelink transmission resource pool in which no PSFCH resource is configured (if the configured sidelink grant for a logical channel has no corresponding resource for PSFCH)
(6) If a logical channel configured with HARQ feedback-based retransmission and a logical channel configured with blind retransmission are allowed to be multiplexed into the same MAC PDU, if a logical channel configured with both HARQ feedback-based retransmission and blind retransmission and a logical channel configured with blind retransmission are allowed to be multiplexed into the same MAC PDU, or if a logical channel configured with both HARQ feedback-based retransmission and blind retransmission and a logical channel configured with HARQ feedback are allowed to be multiplexed into the same MAC PDU

The operation of the UE according to the embodiment of FIG. 9 may be the same as the procedure of Table 2.

**[Table 2]**

| |
|---|
| Sidelink HARQ operation |
| Sidelink HARQ Entity |
| For each sidelink grant, the Sidelink HARQ Entity shall: |
| -1> if the MAC entity determines that the the sidelink grant is used for initial transmission; and |
| -1> if no MAC PDU has been obtained: |
| --2> associate a Sidelink process to this grant. and for each associated Sidelink process: |
| ---3> obtain the MAC PDU to transmit from the Multiplexing and assembly entity, if any; |
| ---3> if a MAC PDU to transmit has been obtained: |
| ----4> if a HARQ Process ID has been set for the sidelink grant: |
| -----5> associate the HARQ Process ID corresponding to the sidelink grant to the associated Sidelink process; |
| ----4> determines Sidelink transmission information of the TB for the source and destination pair of the MAC PDU as follows: |
| -----5> set the Source Layer-1 ID to the 16 MSB of the Source Layer-2 ID of the MAC PDU; |
| -----5> set the Destination Layer-1 ID to the 8 MSB of the Destination Layer-2 ID of the MAC PDU; |
| -----5> consider the NDI to have been toggled and set the NDI to the toggled value; |
| NOTE 2: The initial value of the NDI set to the very first transmission for the Sidelink HARQ Entity is left to UE implementation. |
| -----5> associate the Sidelink process to a Sidelink process ID; |
| NOTE 3: How UE determine Sidelink process ID in SCI is left to UE implementation for NR sidelink. |
| -----5> if *sl-HARQ-FeedbackMode* has been set to Feedback*Enabled* for the logical channel(s) in the MAC PDU; |
| ------6> enable HARQ feedback; |
| -----5> else if sl-HARQ-FeedbackMode has been set to FeedbackandBlindEnabled has been |
| set to Enabled for the logical channel(s) in the MAC PDU; |
| ------6> enable HARQ feedback and blind retranmission; |
| -----5> else if sl-HARQ-FeedbackMode has been set to BlindEnabled for the logical channel(s) in the MAC PDU; |
| ------6> enable blind retransmission and disable HARQ feedback; |
| ----4> deliver the MAC PDU, the sideink grant and the Sidelink transmission information of the TB to the associated Sidelink process; |
| ----4> instruct the associated Sidelink process to trigger a new transmission. |
| -1> else (i.e. retransmission): |
| --2> if the HARQ Process ID corresponding to the sidelink grant received on PDCCH is associated to a Sidelink process of which HARQ buffer is empty; or |
| --2> if the HARQ Process ID corresponding to the sidelink grant received on PDCCH is not associated to any Sidelink process: |
| ---3> ignore the sidelink grant. |
| --2> else: |
| ---3> identify the Sidelink process associated with this grant, and for each associated Sidelink process: |
| ----4> if *sl-MaxTransNum* corresponding to the highest priority of the logical channel(s) in the MAC PDU has been configured in *sl-CG-MaxTransNumList* for the sidelink grant by RRC and the maximum number of transmissions of the MAC PDU has been reached to *sl-MaxTransNum;* or |
| ----4> if a positive acknowledgement to a transmission of the MAC PDU has been received; |
| or |
| ----4> if only a negative acknowledgement was enabled in the SCI and no negative acknowledgement was received for the most recent (re-)transmission of the MAC PDU: |
| -----5> flush the HARQ buffer of the associated Sidelink process; |
| ----4> else: |
| -----5> deliver the sidelink grant of the MAC PDU to the associated Sidelink process; |
| -----5> instruct the associated Sidelink process to trigger a retransmission. |
| Sidelink process |
| The Sidelink process is associated with a HARQ buffer. |
| New transmissions and retransmissions are performed on the resource indicated in the sidelink grant and with the MCS selected. |
| If the Sidelink process is configured to perform transmissions of multiple MAC PDUs the process maintains a counter SL_RESOURCE_RESELECTION_COUNTER. For other configurations of the |
| Sidelink process, this counter is not available. |
| If the Sidelink HARQ Entity requests a new transmission, the Sidelink process shall: |
| -1> store the MAC PDU in the associated HARQ buffer; |
| -1> store the sidelink grant received from the Sidelink HARQ Entity; |
| -1> generate a transmission as described below; |
| If the Sidelink HARQ Entity requests a retransmission, the Sidelink process shall: |
| -1> generate a transmission as described below; |
| To generate a transmission, the Sidelink process shall: |
| -1> if there is no uplink transmission; or |
| -1> if the MAC entity is able to simultaneously perform uplink transmission(s) and sidelink transmission at the time of the transmission; or |
| -1> if the other MAC entity and the MAC entity are able to simultaneously perform uplink transmission(s) and sidelink transmission at the time of the transmission respectively; or |
| -1> if there is a MAC PDU to be transmitted for this duration in uplink, except a MAC PDU obtained from the Msg3 buffer or prioritized, and the sidelink transmission is prioritized over uplink transmission: |
| --2> instruct the physical layer to transmit SCI according to the stored sidelink grant with the associated Sidelink transmission information; |
| --2> instruct the physical layer to generate a transmission according to the stored sidelink grant; |
| --2> if *sl-HARQ-FeedbackMode* has been set to Feedbackenabled for the logical channel(s) in the MAC PDU: |
| ---3> instruct the physical layer to monitor PSFCH for the transmission and perform PSFCH reception. |
| --2> else if *sl-HARQ-FeedbackMode* has been set to FeedbackandBlind*enabled* for the logical channel(s) in the MAC PDU: |
| ---3> if the condition in Condition of FeedbackandBlind is not met: |
| ----4> instruct the physical layer to monitor PSFCH for the transmission and perform PSFCH reception. |
| -1> if this transmission corresponds to the last transmission of the MAC PDU: |
| --2> decrement SL_RESOURCE_RESELECTION_COUNTER by 1, if available. |
| Condition of FeedbackandBlind |
| -1> if transmission(s) with the configured sidelink grant cannot fulfil the latency requirement of the SL data in a logical channel; or |
| -1> if transmission(s) with the configured sidelink grant cannot fulfil the PDB requirement of SL data available in a logical channel; or |
| -1> if the configured sidelink grant is (re-)selected from the pool of resource without PSFCH; |
| or |
| -1> if the configured sidelink grant by gNB(ng-eNB) indicates HARQ-feedbackDisabled for a logical channel; or |
| -1> if the configured sidelink grant for a logical channel has no corresponding resource for PSFCH; or |
| -1> if a logical channel is allowed to be multiplexed with a logical channel with *sl-HARQ-FeedbackMode* set to Blind*enabled* |
| PSFCH reception |
| The MAC entity shall for each PSSCH transmission: |
| If *sl-PUCCH-Config* is configured by RRC, the MAC entity shall for each MAC PDU: |
| -1> if the *timeAlignmentTimer,* associated with the TAG containing the Serving Cell on which the HARQ feedback is to be transmitted, is stopped or expired: |
| --2> not instruct the physical layer to generate acknowledgement(s) of the data in this TB. |
| -1> else: |
| --2> if the PSSCH transmission was not prioritized: |
| ---3> instruct the physical layer to signal a negative acknowledgement on the PUCCH. |
| --2> else: |
| ---3> instruct the physical layer to signal an acknowledgement corresponding to the transmission on the PUCCH. |

Next, as an embodiment of the disclosure, a detailed description will be given of an operation in which the UE selects one of HARQ feedback-based retransmission or blind retransmission at step 910.
(1) A HARQ transmission configuration value allowing blind transmissions without HARQ feedback (number of blind transmissions) and a configuration value for the maximum number of transmissions may be set in the UE. The UE may perform retransmission as many times as the number of HARQ transmissions allowing blind transmissions without HARQ feedback. For example, when the HARQ transmission configuration value allowing blind transmissions without feedback is set to 2, the operation of the UE is as follows. The UE may perform transmission twice according to blind transmission/retransmission and then perform HARQ feedback-based retransmission. According to HARQ feedback-based retransmission, if the UE determines that retransmission is necessary (that is, when it is determined that a NACK is received from the receiving UE, the transmitting UE may determine that retransmission is necessary) the UE may perform transmission twice according to blind retransmission. The UE may repeat this operation until it is determined that a HARQ NACK has not been received from the receiving UE or until it is determined that the preset maximum number of transmissions is reached.
(2) A transmission configuration value based on HARQ feedback (number of transmissions based on HARQ feedback) and a configuration value for the maximum number of transmissions may be set in the UE. When the UE performs initial transmission and then performs retransmission upon determining that a HARQ NACK is obtained from the receiving UE, the number of transmissions based on HARQ feedback may correspond to a total of the number of initial transmission and the number of retransmissions. As another example, when the UE performs retransmission upon determining that a HARQ NACK is obtained from the receiving UE, the number of transmissions based on HARQ feedback may correspond to the total number of retransmissions. After transmission/retransmission is performed for a preset number of HARQ feedback-based transmissions, if it is determined that retransmission is still necessary, the UE may perform blind retransmission until it is determined that the configuration value for the maximum number of transmissions is reached. For example, assuming that the transmission configuration value based on HARQ feedback corresponds to the total of initial transmission and retransmissions, when this value is set to 3, the operation of the UE is as follows. The UE may initially transmit a MAC PDU based on HARQ feedback, and if it is determined that a HARQ NACK is obtained from the receiving UE, the UE may perform HARQ feedback based retransmission. If it is determined that a HARQ NACK is obtained from the receiving UE for the retransmission, the UE may determine that retransmission is necessary; since transmission is performed three times with the configuration value of 3 for HARQ feedback-based transmission, the UE may determine that subsequent retransmission should be performed on a blind basis. Thereafter, the UE may perform HARQ transmission as many times as a number obtained by subtracting the number of already performed transmissions from the configuration value for the maximum number of transmissions. In the above example, if it is determined that an ACK is obtained from the receiving UE before the preset value of 3 times for HARQ feedback-based transmissions is reached, the UE may stop transmitting the MAC PDU.
(3) While the base station allocates initial transmission resources and retransmission resources, it may inform the UE whether HARQ feedback-based retransmission is required or blind retransmission is required. When the UE receives transmission resource allocation control signaling from the base station and determines that HARQ feedback-based transmission is indicated, it may instruct the receiving UE to transmit HARQ feedback when transmitting the MAC PDU through the corresponding resource. Or, when the UE receives transmission resource allocation control signaling from the base station and determines that blind transmission is indicated (i.e., HARQ feedback is disabled and the maximum number of retransmissions is non-zero), it transmits the MAC PDU through the corresponding resource, in which case there is no need to instruct the receiving UE to transmit HARQ feedback.

According to various embodiments of the disclosure, configuration information for the UE to determine whether to apply HARQ retransmission mode and blind retransmission mode in a mixed manner may include Table 3 below. The configuration information may be configured for a logical channel of the corresponding SLRB when configuring the SLRB based on the QoS profile of the sidelink flow reported by the UE to the base station. Or, the configuration information may be configured for the SLRB logical channel corresponding to the QoS profile in the SLRB configuration of the SIB transmitted by the base station. Or, the configuration information may be configured for the SLRB logical channel corresponding to the QoS profile in the pre-configured SLRB configuration. Or, the configuration information may be configured for each sidelink logical channel, for each UE, or for each cell. For example, the configuration information may be configured in the UE by being included in the SL-LogicalChannelConfig information element and the SL-PSSCH-TxParameters information element.

**[Table 3]**

| |
|---|
| - Maximum transmission configuration value when using blind retransmission mode in mixed mode (sl-MaxTxTransNumPSSCHklixed) |
| - PDB requirement (Required delay budget, sl-DelayBudget) |
| - Latency requirement (Required latency bound, sl-LatencyBound) |
| - Indication of whether to apply mixed mode for corresponding logical channel (sl-HARQMixedEnabled |
| - HARQ retransmission mode configuration applied to corresponding logical channel (sl-HARQ-FeedbackMode: FeedbackandBlindEnabled, BlindEnabled, FeedbackEnabled) |

A logical channel configured with HARQ feedback-based retransmission and a logical channel configured with blind retransmission cannot be multiplexed into the same MAC PDU. On the other hand, a logical channel configured with both HARQ feedback-based retransmission and blind retransmission and a logical channel configured with HARQ feedback-based retransmission may be allowed to be multiplexed into the same MAC PDU. This may be configured for a logical channel of the UE. Also, a logical channel configured with both HARQ feedback-based retransmission and blind retransmission and a logical channel configured with blind retransmission may be allowed to be multiplexed into the same MAC PDU. This may be configured for a logical channel of the UE. The UE operation for determining multiplexing based on the HARQ transmission (retransmission) mode of a logical channel is shown as a procedure of Table 4 below.

**[Table 4]**

| |
|---|
| Allocation of sidelink resources |
| The MAC entity shall for each SCI corresponding to a new transmission: |
| - A logical channel configured with *sl-HARQ-FeedbackMode* set |
| to *FeedbackEnabled* and a logical channel configured with *sl-HARQ-FeedbackMode* set to *BlindEnabled* cannot be multiplexed into the same MAC PDU. |
| - A logical channel configured with *sl-HARQ-FeedbackMode* set to *FeedbackEnabled* and a logical channel configured with *sl-HARQ-FeedbackMode* set to *FeedbackAndBlindEnabled* can be multiplexed into the same MAC PDU if multiplexallowedMixed is configured. |
| - A logical channel configured with *sl-HARQ-FeedbackMode* set to *BlindEnabled* and a logical channel configured with *sl-HARQ-FeedbackMode* set to *FeedbackAndBlindEnabled* can be multiplexed into the same MAC PDU if multiplexallowedMixed is configured. |

A scheme for the UE to select a logical channel when constructing a MAC PDU for initial transmission is shown as a procedure of Table 5. When a logical channel supporting both HARQ feedback-based retransmission and blind retransmission is multiplexed with a logical channel of HARQ feedback-based retransmission mode or a logical channel of blind retransmission mode as in embodiment 2 or embodiment 3 of Table 5, if the UE determines that retransmission of the MAC PDU is necessary, as in various embodiments of the disclosure, the UE may determine the retransmission mode based on the retransmission condition for a logical channel supporting both HARQ feedback-based retransmission and blind retransmission (e.g., determination at step 910).

**[Table 5]**

| |
|---|
| Selection of logical channels, embodiment 1 (a logical channel determined to have the highest priority and a logical channel of the same sl-HARQ-FeedbackMode as that may be multiplexed) |
| Embodiment 1 may be, for example, as follows. |
| The MAC entity shall for each SCI corresponding to a new transmission: |
| -1> if the selected logical channel with the highest priority has been configured with *sl-HARQ-FeedbackMode set to FeedbackEnabled:* |
| --2>exclude the logical channels configured with *sl-HARQ-FeedbackMode set to BlindEnabled* and the logical channels configured with *sl-HARQ-FeedbackMode* set to *FeedbackAndBlindEnabled,* if any. |
| -1> else if the selected logical channel with the highest priority has been configured with *sl-HARQ-FeedbackMode set to FeedbackAndBlindEnabled:* |
| --2> exclude the logical channels configured with *sl-HARQ-FeedbackMode set to BlindEnabled* and the logical channels configured with *sl-HARQ-FeedbackMode* set to *FeedbackEnabled,* if any. |
| -1> else if the selected logical channel with the highest priority has been configured with *sl-HARQ-FeedbackMode set to BlindEnabled:* |
| --2> exclude the logical channels configured with *sl-HARQ-FeedbackMode set to FeedbackAndBlindEnabled* and the logical channels configured with *sl-HARQ-FeedbackMode* set to *FeedbackEnabled,* if any. |
| Selection of logical channels, Embodiment 2 (when the logical channel determined to have the highest priority corresponds to the HARQ feedback-based retransmission mode or the blind retransmission mode, a logical channel of the same mode (HARQ feedback-based retransmission mode or blind retransmission mode) and a logical channel configured to use both HARQ feedback-based retransmission and blind retransmission may be multiplexed. When the logical channel determined to have the highest priority is a logical channel configured to use both HARQ feedback-based retransmission and blind retransmission, logical channels having the same configuration may be multiplexed.) Embodiment 2 may be, for example, as follows. |
| The MAC entity shall for each SCI corresponding to a new transmission: |
| -1> if the selected logical channel with the highest priority has been configured with *sl-HARQ-FeedbackMode set to FeedbackEnabled:* |
| --2> exclude the logical channels configured with *sl-HARQ-FeedbackMode set to BlindEnabled,* if any. |
| -1> else if the selected logical channel with the highest priority has been configured with *sl-HARQ-FeedbackMode set to BlindEnabled:* |
| --2> exclude the logical channels configured with *sl-HARQ-FeedbackMode* set to *FeedbackEnabled,* if any. |
| -1> else if the selected logical channel with the highest priority has been configured with *sl-HARQ-FeedbackMode set to FeedbackAndBlindEnabled:* |
| --2> exclude the logical channels configured with *sl-HARQ-FeedbackMode set to BlindEnabled* and the logical channels configured with *sl-HARQ-FeedbackMode* set to *FeedbackEnabled,* if any. |
| Selection of logical channels, Embodiment 3 (when the logical channel determined to have the highest priority corresponds to the HARQ feedback-based retransmission mode or the blind retransmission mode, a logical channel of the same mode (HARQ feedback-based retransmission mode or blind retransmission mode) and a logical channel configured to |
| use both HARQ feedback-based retransmission and blind retransmission may be multiplexed. When the logical channel determined to have the highest priority is a logical channel configured to use both HARQ feedback-based retransmission and blind retransmission, a logical channel of the same mode as that and a logical channel configured with blind retransmission may be multiplexed.) |
| Embodiment 3 may be, for example, as follows. |
| The MAC entity shall for each SCI corresponding to a new transmission: |
| -1> if the selected logical channel with the highest priority has been configured with *sl-HARQ-FeedbackMode set to FeedbackEnabled* |
| --2> exclude the logical channels configured with *sl-HARQ-FeedbackMode set to BlindEnabled,* if any. |
| -1> else if the selected logical channel with the highest priority has been configured with *sl-HARQ-FeedbackMode set to BlindEnabled*: |
| --2> exclude the logical channels configured with *sl-HARQ-FeedbackMode* set to *FeedbackEnabled,* if any. |
| -1> else if the selected logical channel with the highest priority has been configured with *sl-HARQ-FeedbackMode set to FeedbackAndBlindEnabled*: |
| --2> exclude the logical channels configured with *sl-HARQ-FeedbackMode* set to *FeedbackEnabled,* if any. |

The methods according to the embodiments described in the claims or specification of the disclosure may be implemented in the form of hardware, software, or a combination thereof.

When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure.

Such a program (software module, software) may be stored in a random access memory, a nonvolatile memory such as a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Or, such a program may be stored in a memory composed of a combination of some or all of them. In addition, a plurality of component memories may be included.

In addition, such a program may be stored in an attachable storage device that can be accessed through a communication network such as the Internet, an intranet, a local area network (LAN), a wide LAN (WLAN), or a storage area network (SAN), or through a communication network composed of a combination thereof. Such a storage device may access the device that carries out an embodiment of the disclosure through an external port. In addition, a separate storage device on a communication network may access the device that carries out an embodiment of the disclosure.

In the specific embodiments of the disclosure, the elements included in the disclosure are expressed in a singular or plural form according to the proposed specific embodiment. However, the singular or plural expression is appropriately selected for ease of description according to the presented situation, and the disclosure is not limited to a single element or plural elements. Those elements described in a plural form may be configured as a single element, and those elements described in a singular form may be configured as plural elements.

On the other hand, although specific embodiments have been described in the detailed description of the disclosure, various modifications are possible without departing from the scope of the disclosure. Therefore, the scope of the disclosure should not be limited to the described embodiments but should be defined by the appended claims.

## Claims

1. A method performed by a first terminal in a wireless communication system, the method comprising:
receiving, from a base station, hybrid automatic repeat request, HARQ, configuration information including information on a mixed mode for applying both HARQ feedback-based retransmission and blind retransmission to a medium access control, MAC, protocol data unit, PDU, corresponding to a sidelink logical channel;
based on the information, determining a MAC PDU to be transmitted is configured to the mixed mode;
retransmitting, to a second terminal, the MAC PDU, by applying a first retransmission mode;
in case that the first terminal determines to retransmit the MAC PDU, selecting a second retransmission mode; and
retransmitting, to the second terminal, the MAC PDU by applying the selected second retransmission mode,
wherein in case that the first retransmission mode is the HARQ feedback-based retransmission and it is determined that the sidelink logical channel fails to satisfy a latency requirement, the first terminal selects the second retransmission mode to the blind retransmission.

2. The method of claim 1,
wherein in case that the first retransmission mode is the HARQ feedback-based retransmission and the second retransmission mode is the blind retransmission, the first terminal determines to retransmit the MAC PDU in case that the first terminal receives negative-acknowledgement, NACK, information from the second terminal and a maximum retransmission configuration value for the HARQ feedback-based retransmission is not reached.

3. The method of claim 1,
wherein in case that the first retransmission mode is the HARQ feedback-based retransmission and the second retransmission mode is the blind retransmission, the first terminal selects the second retransmission mode to the blind retransmission in case that the sidelink logical channel fails to satisfy a packet delay budget, PDB, requirement.

4. The method of claim 1,
wherein in case that the first retransmission mode is the blind retransmission and the second retransmission mode is the HARQ feedback-based retransmission, the first terminal determines to retransmit the MAC PDU in case that a maximum retransmission configuration value for the blind retransmission is not reached.

5. The method of claim 4,
wherein in case that the first retransmission mode is the blind retransmission and the second retransmission mode is the HARQ feedback-based retransmission, the first terminal selects the second retransmission mode to the HARQ feedback-based retransmission in case that the base station indicates the retransmission mode for the sidelink logical channel.

6. A first terminal in a wireless communication system, the first terminal comprising:
a transceiver, and
a controller coupled with the transceiver, and configured to:
receive, from a base station, hybrid automatic repeat request, HARQ, configuration information including information on a mixed mode for applying both HARQ feedback-based retransmission and blind retransmission to a medium access control, MAC, protocol data unit, PDU, corresponding to a sidelink logical channel,
based on the information, determine a MAC PDU to be transmitted is configured to the mixed mode,
retransmit, to a second terminal, the MAC PDU, by applying a first retransmission mode,
in case that the first terminal determines to retransmit the MAC PDU, select a second retransmission mode, and
retransmit, to the second terminal, the MAC PDU by applying the selected second retransmission mode,
wherein in case that the first retransmission mode is the HARQ feedback-based retransmission and it is determined that the sidelink logical channel fails to satisfy a latency requirement, the first terminal selects the second retransmission mode to the blind retransmission.

7. The first terminal of claim 6,
wherein in case that the first retransmission mode is the HARQ feedback-based retransmission and the second retransmission mode is the blind retransmission, the first terminal determines to retransmit the MAC PDU in case that the first terminal receives negative-acknowledgement, NACK, information from the second terminal and a maximum retransmission configuration value for the HARQ feedback-based retransmission is not reached.

8. The first terminal of claim 6,
wherein in case that the first retransmission mode is the HARQ feedback-based retransmission and the second retransmission mode is the blind retransmission, the first terminal selects the second retransmission mode to the blind retransmission in case that the sidelink logical channel fails to satisfy a packet delay budget, PDB, requirement.

9. The first terminal of claim 6,
wherein in case that the first retransmission mode is the blind retransmission and the second retransmission mode is the HARQ feedback-based retransmission, the first terminal determines to retransmit the MAC PDU in case that a maximum retransmission configuration value for the blind retransmission is not reached.

10. The first terminal of claim 9,
wherein in case that the first retransmission mode is the blind retransmission and the second retransmission mode is the HARQ feedback-based retransmission, the first terminal selects the second retransmission mode to the HARQ feedback-based retransmission in case that the base station indicates the retransmission mode for the sidelink logical channel.

## Patentansprüche

1. Verfahren, das von einem ersten Endgerät in einem drahtlosen Kommunikationssystem ausgeführt wird, wobei das Verfahren Folgendes umfasst:
Empfangen von hybriden automatischen Wiederholungsanforderungs(HARQ)-Konfigurationsinformationen, die Informationen über einem gemischten Modus zum Anwenden sowohl einer HARQ-Feedback-basierten Neuübertragung als auch einer blinden Neuübertragung an eine Medium Access Control(MAC)-Protokolldateneinheit, PDU, enthalten, die einem logischen Sidelink-Kanal entspricht, von einer Basisstation;
basierend auf den Informationen, Bestimmen, dass eine zu übertragende MAC-PDU für den gemischten Modus konfiguriert ist;
erneutes Übertragen der MAC-PDU durch Anwenden eines ersten Neuübertragungsmodus an ein zweites Endgerät;
falls das erste Endgerät bestimmt, die MAC-PDU erneut zu übertragen, Auswählen eines zweiten Neuübertragungsmodus; und
erneutes Übertragen der MAC-PDU durch Anwenden des ausgewählten zweiten Neuübertragungsmodus an das zweite Endgerät,
wobei, falls der erste Neuübertragungsmodus die HARQ-Feedback-basierte Neuübertragung ist und bestimmt wird, dass der logische Sidelink-Kanal eine Latenzanforderung nicht erfüllt, das erste Endgerät den zweiten Neuübertragungsmodus für die blinde Neuübertragung auswählt.

2. Verfahren nach Anspruch 1,
wobei, falls der erste Neuübertragungsmodus die HARQ-Feedback-basierte Neuübertragung ist und der zweite Neuübertragungsmodus die blinde Neuübertragung ist, das erste Endgerät bestimmt, die MAC-PDU erneut zu übertragen, falls das erste Endgerät NACK(negative Bestätigung)-Informationen von dem zweiten Endgerät empfängt und ein maximaler Neuübertragungs-Konfigurationswert für die HARQ-Feedback-basierte Neuübertragung nicht erreicht wird.

3. Verfahren nach Anspruch 1,
wobei, falls der erste Neuübertragungsmodus die HARQ-Feedback-basierte Neuübertragung ist und der zweite Neuübertragungsmodus die blinde Neuübertragung ist, das erste Endgerät den zweiten Neuübertragungsmodus für die blinde Neuübertragung auswählt, falls der logische Sidelink-Kanal eine Paketverzögerungsbudget(PDB)-Anforderung nicht erfüllt.

4. Verfahren nach Anspruch 1,
wobei, falls der erste Neuübertragungsmodus die blinde Neuübertragung ist und der zweite Neuübertragungsmodus die HARQ-Feedback-basierte Neuübertragung ist, das erste Endgerät bestimmt, die MAC-PDU erneut zu übertragen, falls ein maximaler Neuübertragungs-Konfigurationswert für die blinde Neuübertragung nicht erreicht wird.

5. Verfahren nach Anspruch 4,
wobei, falls der erste Neuübertragungsmodus die blinde Neuübertragung ist und der zweite Neuübertragungsmodus die HARQ-Feedback-basierte Neuübertragung ist, das erste Endgerät den zweiten Neuübertragungsmodus für die HARQ-Feedback-basierte Neuübertragung auswählt, falls die Basisstation den Neuübertragungsmodus für den logischen Sidelink-Kanal anzeigt.

6. Erstes Endgerät in einem drahtlosen Kommunikationssystem, wobei das erste Endgerät Folgendes umfasst:
einen Transceiver, und
eine Steuerung, die mit dem Transceiver gekoppelt und zu Folgendem konfiguriert ist:
Empfangen von hybriden automatischen Wiederholungsanforderungs(HARQ)-Konfigurationsinformationen, die Informationen über einen gemischten Modus zum Anwenden sowohl einer HARQ-Feedback-basierten Neuübertragung als auch einer blinden Neuübertragung an eine Medium Access Control(MAC)-Protokolldateneinheit, PDU, enthalten, die einem logischen Sidelink-Kanal entspricht, von einer Basisstation,
basierend auf den Informationen, Bestimmen, dass eine zu übertragende MAC-PDU für den gemischten Modus konfiguriert ist,
erneutes Übertragen der MAC-PDU durch Anwenden eines ersten Neuübertragungsmodus an ein zweites Endgerät,
falls das erste Endgerät bestimmt, die MAC-PDU erneut zu übertragen, Auswählen eines zweiten Neuübertragungsmodus, und
erneutes Übertragen der MAC-PDU durch Anwenden des ausgewählten zweiten Neuübertragungsmodus an das zweite Endgerät,
wobei, falls der erste Neuübertragungsmodus die HARQ-Feedback-basierte Neuübertragung ist und bestimmt wird, dass der logische Sidelink-Kanal eine Latenzanforderung nicht erfüllt, das erste Endgerät den zweiten Neuübertragungsmodus für die blinde Neuübertragung auswählt.

7. Erstes Endgerät nach Anspruch 6,
wobei, falls der erste Neuübertragungsmodus die HARQ-Feedback-basierte Neuübertragung ist und der zweite Neuübertragungsmodus die blinde Neuübertragung ist, das erste Endgerät bestimmt, die MAC-PDU erneut zu übertragen, falls das erste Endgerät NACK(negative Bestätigung)-Informationen von dem zweiten Endgerät empfängt und ein maximaler Neuübertragungs-Konfigurationswert für die HARQ-Feedback-basierte Neuübertragung nicht erreicht wird.

8. Erstes Endgerät nach Anspruch 6,
wobei, falls der erste Neuübertragungsmodus die HARQ-Feedback-basierte Neuübertragung ist und der zweite Neuübertragungsmodus die blinde Neuübertragung ist, das erste Endgerät den zweiten Neuübertragungsmodus für die blinde Neuübertragung auswählt, falls der logische Sidelink-Kanal eine Paketverzögerungsbudget(PDB)-Anforderung nicht erfüllt.

9. Erstes Endgerät nach Anspruch 6,
wobei, falls der erste Neuübertragungsmodus die blinde Neuübertragung ist und der zweite Neuübertragungsmodus die HARQ-Feedback-basierte Neuübertragung ist, das erste Endgerät bestimmt, die MAC-PDU erneut zu übertragen, falls ein maximaler Neuübertragungs-Konfigurationswert für die blinde Neuübertragung nicht erreicht wird.

10. Erstes Endgerät nach Anspruch 9,
wobei, falls der erste Neuübertragungsmodus die blinde Neuübertragung ist und der zweite Neuübertragungsmodus die HARQ-Feedback-basierte Neuübertragung ist, das erste Endgerät den zweiten Neuübertragungsmodus für die HARQ-Feedback-basierte Neuübertragung auswählt, falls die Basisstation den Neuübertragungsmodus für den logischen Sidelink-Kanal anzeigt.

## Revendications

1. Procédé effectué par un premier terminal dans un système de communication sans fil, le procédé comprenant :
recevoir, d'une station de base, des informations de configuration de demande de répétition automatique hybride, HARQ, incluant des informations sur un mode mixte pour appliquer à la fois une retransmission basée sur la rétroaction HARQ et une retransmission aveugle à une unité de données de protocole, PDU, de contrôle d'accès au support, MAC, correspondant à un canal logique de liaison latérale ;
sur la base des informations, déterminer qu'une PDU de MAC à transmettre est configurée pour le mode mixte ;
retransmettre, à un deuxième terminal, la PDU de MAC, en appliquant un premier mode de retransmission ;
dans le cas où le premier terminal détermine de retransmettre la PDU de MAC, sélectionner un deuxième mode de retransmission ; et
retransmettre, au deuxième terminal, la PDU de MAC en appliquant le deuxième mode de retransmission sélectionné,
où, dans le cas où le premier mode de retransmission est la retransmission basée sur la rétroaction HARQ et qu'il est déterminé que le canal logique de liaison latérale ne satisfait pas à une exigence de latence, le premier terminal sélectionne le deuxième mode de retransmission comme la retransmission aveugle.

2. Procédé selon la revendication 1,
où, dans le cas où le premier mode de retransmission est la retransmission basée sur la rétroaction HARQ et que le deuxième mode de retransmission est la retransmission aveugle, le premier terminal détermine de retransmettre la PDU de MAC dans le cas où le premier terminal reçoit des informations d'accusé de réception négatif, NACK, provenant du deuxième terminal et qu'une valeur de configuration de retransmission maximale pour la retransmission basée sur la rétroaction HARQ n'est pas atteinte.

3. Procédé selon la revendication 1,
où, dans le cas où le premier mode de retransmission est la retransmission basée sur la rétroaction HARQ et que le deuxième mode de retransmission est la retransmission aveugle, le premier terminal sélectionne le deuxième mode de retransmission comme la retransmission aveugle dans le cas où le canal logique de liaison latérale ne satisfait pas à une exigence de budget de retard de paquet, PDB.

4. Procédé selon la revendication 1,
où, dans le cas où le premier mode de retransmission est la retransmission aveugle et que le deuxième mode de retransmission est la retransmission basée sur la rétroaction HARQ, le premier terminal détermine de retransmettre la PDU de MAC dans le cas où une valeur de configuration de retransmission maximale pour la retransmission aveugle n'est pas atteinte.

5. Procédé selon la revendication 4,
où, dans le cas où le premier mode de retransmission est la retransmission aveugle et que le deuxième mode de retransmission est la retransmission basée sur la rétroaction HARQ, le premier terminal sélectionne le deuxième mode de retransmission comme la retransmission basée sur la rétroaction HARQ dans le cas où la station de base indique le mode de retransmission pour le canal logique de liaison latérale.

6. Premier terminal dans un système de communication sans fil, le premier terminal comprenant :
un émetteur-récepteur, et
un contrôleur couplé à l'émetteur-récepteur et configuré pour :
recevoir, d'une station de base, des informations de configuration de demande de répétition automatique hybride, HARQ, incluant des informations sur un mode mixte pour appliquer à la fois une retransmission basée sur la rétroaction HARQ et une retransmission aveugle à une unité de données de protocole, PDU, de contrôle d'accès au support, MAC, correspondant à un canal logique de liaison latérale,
sur la base des informations, déterminer qu'une PDU de MAC à transmettre est configurée pour le mode mixte,
retransmettre, à un deuxième terminal, la PDU de MAC, en appliquant un premier mode de retransmission,
dans le cas où le premier terminal détermine de retransmettre la PDU de MAC, sélectionner un deuxième mode de retransmission, et
retransmettre, au deuxième terminal, la PDU de MAC en appliquant le deuxième mode de retransmission sélectionné,
où, dans le cas où le premier mode de retransmission est la retransmission basée sur la rétroaction HARQ et qu'il est déterminé que le canal logique de liaison latérale ne satisfait pas à une exigence de latence, le premier terminal sélectionne le deuxième mode de retransmission comme la retransmission aveugle.

7. Premier terminal de la revendication 6,
où, dans le cas où le premier mode de retransmission est la retransmission basée sur la rétroaction HARQ et que le deuxième mode de retransmission est la retransmission aveugle, le premier terminal détermine de retransmettre la PDU de MAC dans le cas où le premier terminal reçoit des informations d'accusé de réception négatif, NACK, provenant du deuxième terminal et qu'une valeur de configuration de retransmission maximale pour la retransmission basée sur la rétroaction HARQ n'est pas atteinte.

8. Premier terminal de la revendication 6,
où, dans le cas où le premier mode de retransmission est la retransmission basée sur la rétroaction HARQ et que le deuxième mode de retransmission est la retransmission aveugle, le premier terminal sélectionne le deuxième mode de retransmission comme la retransmission aveugle dans le cas où le canal logique de liaison latérale ne satisfait pas à une exigence de budget de retard de paquet, PDB.

9. Premier terminal selon la revendication 6,
où, dans le cas où le premier mode de retransmission est la retransmission aveugle et que le deuxième mode de retransmission est la retransmission basée sur la rétroaction HARQ, le premier terminal détermine de retransmettre la PDU de MAC dans le cas où une valeur de configuration de retransmission maximale pour la retransmission aveugle n'est pas atteinte.

10. Premier terminal selon la revendication 9,
où, dans le cas où le premier mode de retransmission est la retransmission aveugle et que le deuxième mode de retransmission est la retransmission basée sur la rétroaction HARQ, le premier terminal sélectionne le deuxième mode de retransmission comme la retransmission basée sur la rétroaction HARQ dans le cas où la station de base indique le mode de retransmission pour le canal logique de liaison latérale.
